# EUROPÄISCHE PATENTSCHRIFT

(11) **EP 2 944 904 B1**
(45) Veröffentlichungstag und Bekanntmachung des Hinweises auf die Patenterteilung: **01.04.2020**
(21) Anmeldenummer: 14001675.9
(22) Anmeldetag: 13.05.2014
(51) Int. Cl.: F27B 9/02, F27B 9/10, F27B 9/22, F27B 9/26, F27B 9/30, F27B 17/00

(54) **Ofen zum Brennen von keramischen Formlingen**
Kiln for the firing of ceramic blanks
Four de brûlage d'ébauches en céramique

(43) Veröffentlichungstag der Anmeldung: 18.11.2015
(73) Patentinhaber: Keller HCW GmbH, 49479 Ibbenbüren-Laggenbeck (DE)
(72) Erfinder: Gausmann, Heiner, 49205 Hasbergen (DE); Heitmann, Peter, 48612 Horstmar (DE); Hüsing, Rainer, 48480 Spelle (DE)
(74) Vertreter: Pott, Ulrich

(56) Entgegenhaltungen:
- DE-A1- 2 551 811
- DE-A1- 2 721 948
- DE-A1- 3 042 708
- DE-A1- 3 437 237
- DE-A1-102011 112 838
- GB-A- 461 088
- US-A- 1 720 550

## Beschreibung

Die Erfindung bezieht sich auf einen Ofen zum Brennen von keramischen Formlingen, insbesondere von Ziegeln mit einer Mehrzahl von parallel zueinander und entlang einer längs verlaufenden Ofenstrecke bewegbaren, mehrere Ofenwagen umfassenden Zügen, auf denen die Formlinge anzuordnen sind, wobei die Ofenstrecke eine Brennzone zur Erhitzung der Formlinge aufweist und wobei nebeneinander angeordnete Züge in entgegengesetzte Richtungen bewegbar sind ohne eine Richtungsumkehr durch eine Brennzone, wobei zumindest ein Lüfter vorgesehen ist.

Ein Ofen dieser Art ist aus der DE 10 2011 112 838 A1 bekannt. Bei diesem Ofen erfolgt die Bestückung des Ofens auf der einen Seite der Ofenstrecke, während auf der gegenüberliegenden anderen Seite der Ofenstrecke eine Bestückung der jeweiligen Züge mit Formlingen für einen Transport durch den Ofen entlang der Ofenstrecke in die entgegengesetzte Richtung erfolgt. Dabei findet in den jeweiligen Zügen keine Richtungsumkehr statt, so dass sich die Formlinge auf ihren jeweiligen Ofenzügen durch die Brennzone hindurch bewegen und jeweils am bezüglich ihrer Bestückung entgegengesetzten Ende der Ofenstrecke dieser entnommen werden. Durch die auf beiden Seiten der Brennzone jeweils aneinander vorbei bewegten Formlinge werden von den bereits die Brennzone verlassenden Formlinge andere als Kaltbesatz aufgeheizt, bevor sie in die Brennzone gelangen. Durch den Verzicht auf eine Richtungsumkehr in der Brennzone wird der zur Verfügung stehende Bauraum des Ofens optimal ausgenutzt. Die Formlinge werden in der Brennzone durch in einer Längsgasse (Haupttunnel) zwischen den Zügen angeordnete Brennelemente erhitzt. Hierdurch kann die verwendete Heizenergie direkt zu den Formlingen gebracht werden, was zu einer erhöhten Effizienz in der Brennzone und mithin zu einem verringerten Energieeinsatz führt. Die Erhitzung der Ziegel oder dergleichen Formlinge kann unmittelbar und gleichmäßig über deren Aufbauhöhe im Besatz verteilt erfolgen.

Dieser gattungsgemäße Ofen hat gegenüber herkömmlichen anderen Öfen erhebliche Vorteile, soll jedoch weiter verbessert werden.

Es ist daher Aufgabe der vorliegenden Erfindung, einen Ofen der eingangs genannten Art weiter zu optimieren.

Zur Lösung dieser Aufgabe zeichnet sich der Ofen der eingangs genannten Art dadurch aus, dass die von dem zumindest einen Lüfter in dem Ofen geförderte Luft zumindest teilweise im Ofen umgewälzt und dem Lüfter wieder zugeführt wird und in der Ofenstrecke zumindest eine Luftleitvorrichtung vorgesehen ist, über die Luft in Richtung von Formlingen in der Ofenstrecke leitbar ist.

Damit ist ein Ofen zur Verfügung gestellt, bei dem die von dem zumindest einen Lüfter geförderte Luft quer zur Ofenstrecke und damit auch quer zur Bewegungsrichtung der entsprechenden Züge mit den Formlingen während des Transportes entlang der Ofenstrecke durch den Ofen die Formlinge bestreicht und dabei Energie von einem heißen Besatz unter gleichzeitiger Kühlung dieses Besatzes übernimmt und diese Energie an einen benachbarten kalten Besatz eines Zuges von Formlingen weiter transportiert und somit diesen aufheizt. Da jeweils abwechselnd ein kalter Besatz einem warmen Besatz benachbart ist mit Ausnahme des in Strömungsrichtung der Luft letzten Zuges entlang der Ofenstrecke, kann mithin eine Zwangskonvektion über die vorzugsweise vorgesehenen mehreren Lüfter erfolgen, was zu einer weiteren Energieeffizienz beiträgt, da nicht nur die Strahlungswärme eines heißen Besatzes an Formlingen genutzt wird, um einen kalten Besatz an Formlingen aufzuheizen, sondern auch die Konvektionswärme.

Über die vorgesehenen Luftleitvorrichtungen ist die Luft optimal durch den Ofen zu führen und kann beispielsweise auch Räume unterhalb eines Umwälzkanals und oberhalb der jeweiligen Haupttunnel zwischen den Zügen erreichen, um ein dortiges schnelles Entlanggleiten der Luft zu verhindern, so dass durch die Luftleitvorrichtung(en) die Luft gezielt in die Haupttunnel und damit zu den Formlingen geführt werden kann. Dabei kann eine Mehrzahl von Luftleitvorrichtungen vorgesehen sein, die von der Wandung, die den Umwälzkanal nach unten hin zu den Formlingen begrenzt, herabragen in die jeweiligen Haupttunnel, wobei Luftleitvorrichtungen unterschiedlich lang sein können und auch unterschiedliche Geometrien aufweisen können und somit auch unterschiedlich tief in Haupttunnel hineinragen. Die Lüfter können beispielsweise als Axialventilatoren ausgebildet sind, die z.B. ausgehend von einem Umwälzkanal Luft ansaugen und in die Ofenstrecke und damit in die Haupttunnel hineinblasen, aber auch beispielsweise als Radialventilatoren, die aus der Ofenstrecke heraus und damit auch aus den Haupttunneln Luft ansaugen und über den Umwälzkanal Luft der Ofenstrecke wieder zuführen, wobei die Lüfter beispielsweise in der Mitte der Ofenstrecke angeordnet sind.

Alternativ ist es ebenfalls möglich, beispielsweise den Lüfter in einem Leitungssystem unterzubringen, das sich von der einen Seite des Ofens zur gegenüberliegenden anderen Seite erstreckt, und zwar wiederum jeweils bezogen auf eine Seite, die so mit einer Wandung versehen ist, die parallel zur Transportrichtung der jeweiligen Formlingszüge ausgerichtet ist, jedoch sich die Strömungsverbindung über das Leitungssystem quer zu der Transportrichtung der Formlinge und damit quer zur Ofenstrecke erstreckt. Somit können diese Lüfter Luft von einem kalten Besatz eines Zuges auf einen daneben und entgegengesetzt transportierten heißen Besatz von Formlingen fördern. Bei einem letzten Zug, der beispielsweise in Strömungsrichtung der quer die Ofenstrecke strömenden Luft ein heißer Besatz ist, kann über das Leitungssystem die Luft an einen kalten Besatz weitergeleitet werden.

Zur weiteren Erläuterung der Erfindung wird auf weitere Unteransprüche, die nachfolgende Beschreibung und die Zeichnung verwiesen. In der Zeichnung zeigen:

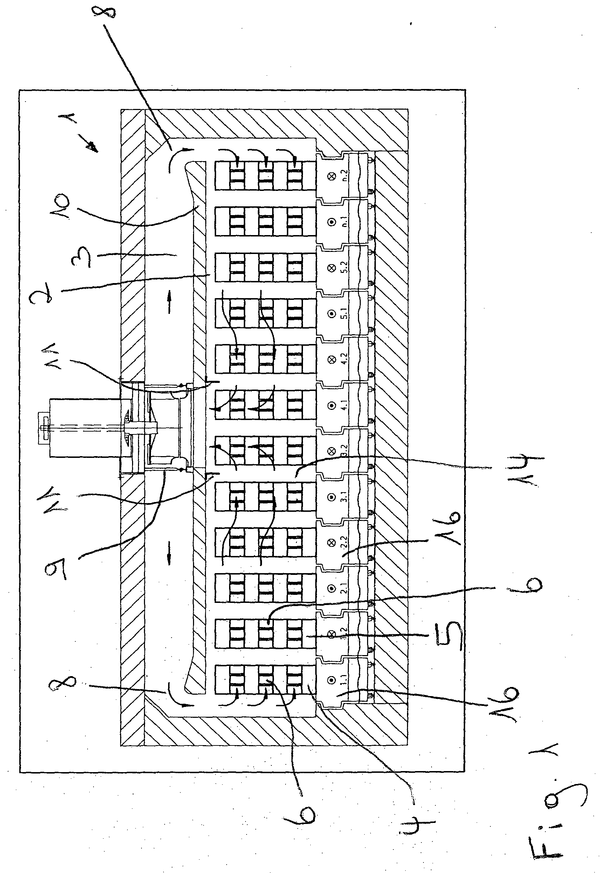

- Fig. 1: in einer schematischen Querschnittsdarstellung ein erstes Ausführungsbeispiel eines Ofens mit einem Radialventilator als Lüfter;
- Fig. 2: eine zu Fig. 1 analoge Darstellung eines alternativen Ausführungsbeispiels mit einem Axialventilator als Lüfter, und
- Fig. 3: eine zu den Fig. 1 und 2 analoge Darstellung eines dritten Ausführungsbeispiels mit einem in einem Leitungssystem vorgesehenen Lüfter.

In der Zeichnung sind grundsätzlich übereinstimmende Teile mit übereinstimmenden Bezugsziffern versehen.

Allgemein mit 1 ist der Ofen beziffert, der eine Ofenstrecke 2 aufweist mit einer Brennzone, einem Umwälzkanal 3 und Kühl- und Aufwärmzonen. In dem Ofen 1 sind in den Ausführungsbeispielen insgesamt zwölf Züge 4, 5 dargestellt, wobei jeweils ein Zug 4 in eine Richtung aus der Zeichnungsebene heraus bewegt wird und der Zug 5 in entgegengesetzte Richtung, also in die Zeichnungsebene hinein bewegt wird.

Ein Zug 4, der mit Formlingen 6 bestückt ist, genauso wie der Zug 5, kann einen kalten Besatz haben, wogegen der Zug 5 einen warmen, also schon gebrannten Besatz an Formlingen 6 hat, so dass jeweils abwechselnd nebeneinander kalte und warme Züge 4, 5 transportiert werden mit Ausnahme des ersten Zuges ganz links in den Zeichnungsblättern und dem rechten letzten Zug, wobei der erste Zug 4 einen kalten Besatz hat und der letzte rechte Besatz einen warmen Besatz hat. Der warme Besatz kann daher nur an der rechten Außenseite seine Wärme an den links benachbarten Besatz dieses Zuges abgeben kann, der wiederum ein kalter Besatz ist. In dem gezeigten Ausführungsbeispiel kann dieser Zug seine Wärme an die Luft 8 abgeben die von dem Lüfter 9, der in dem gezeigten Ausführungsbeispiel ein Radialverdichter ist, angesaugt wird, so dass über den Radialventilator 9 eine Zwangskonvektion innerhalb des Ofens und entlang der Ofenstrecke stattfindet.

Unterhalb des Umwälzkanals 3 ist eine Wandung 10 vorgesehen, an der Luftleitvorrichtungen 11 vorgesehen sind, die verhindern, dass Luft 8 unter Umgehung der Formlinge 6 an der Wandung 10 entlanggefördert wird.

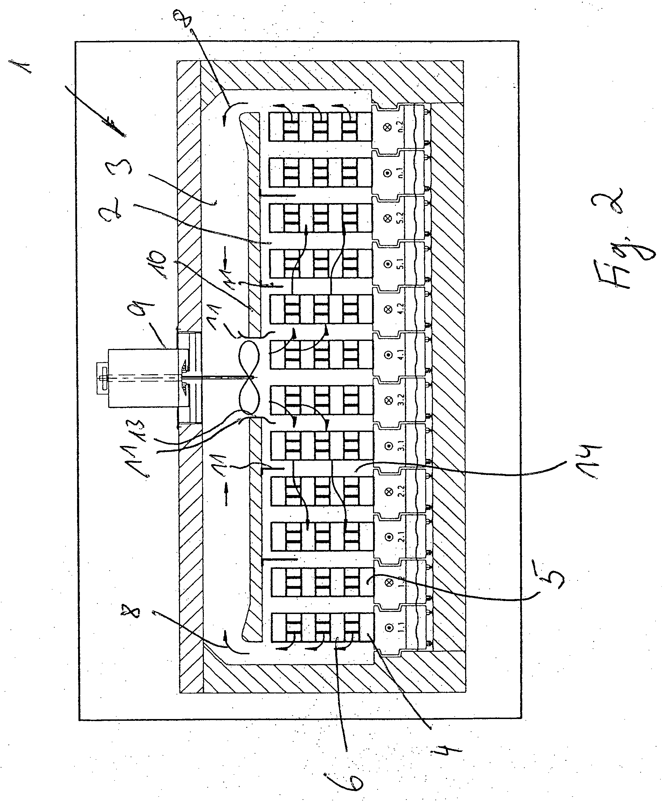

In dem Ausführungsbeispiel nach Fig. 2 ist bei ansonsten im Wesentlichen analoger Ausbildung der Lüfter 9 als Axialventilator ausgebildet, der in eine Öffnung 13 in der Wandung 10 hineinragt, wobei die Öffnung 13 ihrerseits jeweils Luftleitvorrichtungen 11 aufweist. Die benachbarten Luftleitvorrichtungen 11 ragen in einen Haupttunnel 14 zwischen den Zügen 4, 5 von Formlingen 6 hinein und können unterschiedlich lang sein und auch beispielsweise unterschiedlich tief in die Haupttunnel 14 hineinragen. Bei dem Axialventilator 9 wird Luft 8 über den Umwälzkanal 3 angesaugt und über die Öffnung 13 in die Ofenstrecke geblasen.

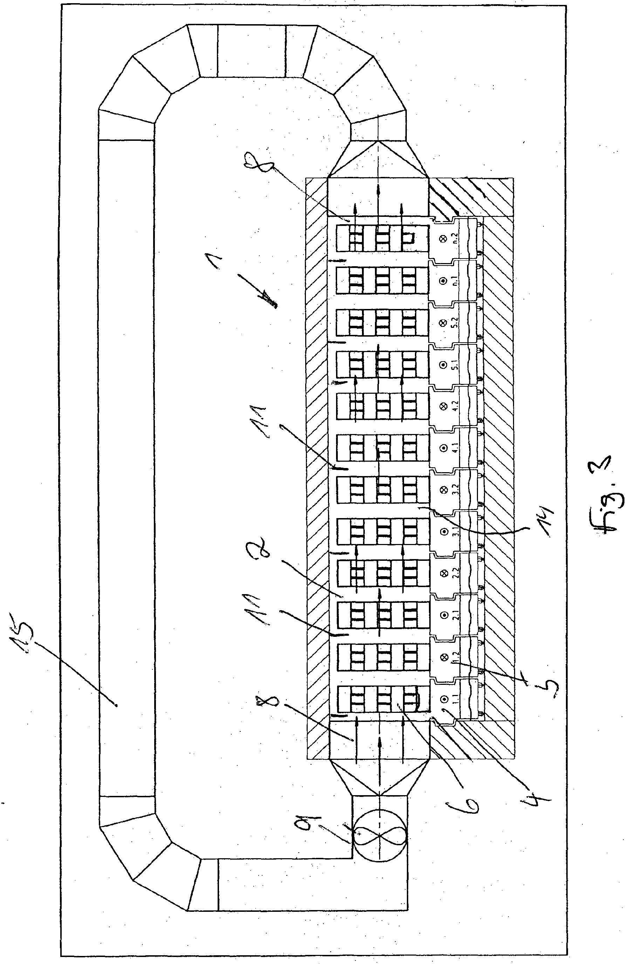

In dem Ausführungsbeispiel nach Fig. 3 ist der Ventilator 9 in einem Leitungsstrang 15 angeordnet. Entsprechend den Pfeilen 8 für Luft bläst der Ventilator 9 Luft 8 in den Ofen 1. Auch dort sind wiederum Luftleitvorrichtungen 11 vorgesehen, um es dem Luftstrom nicht zu ermöglichen, oberhalb der Züge 4 und 5 der Formlinge 6 unter Umgehung der Formlinge 6 durch die Brennzonen durch den Ofen 1 zu strömen.

Beim Eintritt in den Ofen 1 trifft der von dem letzten heißen Besatz (rechts) kommende Luftstrom 8 auf den linken Zug 4, der einen Besatz an kalten Formlingen 6 trägt und heizt diesen auf. Damit ist ein sehr effektiver Betrieb des Ofens 1 ermöglicht.

Es können mehrere Lüfter an unterschiedlichsten Stellen vorgesehen sein.

## Patentansprüche

1. Ofen (1) zum Brennen von keramischen Formlingen (6), insbesondere von Ziegeln mit einer Mehrzahl von parallel zueinander und entlang einer längs verlaufenden Ofenstrecke bewegbaren, mehrere Ofenwagen (16) umfassenden Zügen (4, 5), auf denen die Formlinge (6) anzuordnen sind, wobei die Ofenstrecke eine Brennzone zur Erhitzung der Formlinge (6) aufweist, und wobei nebeneinander angeordnete Züge (4, 5) in entgegengesetzte Richtungen ohne eine Richtungsumkehr durch eine Brennzone bewegbar sind, und wobei zumindest ein Lüfter (9) vorgesehen ist, und wobei die von dem zumindest einen Lüfter (9) in dem Ofen (1) geförderte Luft (8) zumindest teilweise im Ofen (1) umgewälzt und dem Lüfter (9) wieder zugeführt wird und in der Ofenstrecke zumindest eine Luftleitvorrichtung (11) vorgesehen ist, über die Luft (8) in Richtung von Formlingen (6) in der Ofenstrecke leitbar ist, und wobei oberhalb der Formlinge (6) in der Ofenstrecke in einer Luftumwälzzone des Ofens (1) eine Wandung (10) vorgesehen ist, über die wenigstens ein Umwälzkanal (3) von einem Haupttunnel (14) der Ofenstrecke getrennt ist, und wobei an der Wandung (10) zumindest eine Luftleitvorrichtung (11) vorgesehen ist und die zumindest eine Luftleitvorrichtung (11) der Wandung (10) zumindest bereichsweise in einen Haupttunnel (14) der Ofenstrecke ragt.

2. Ofen nach Anspruch 1, **dadurch gekennzeichnet, dass** mehrere mit Abstand nebeneinander angeordnete Luftleitvorrichtungen (11) in der Ofenstrecke vorgesehen sind.

3. Ofen nach Anspruch 2, **dadurch gekennzeichnet, dass** Luftleitvorrichtungen (11) eine unterschiedliche Länge aufweisen.

4. Ofen nach einem der Ansprüche 1 bis 3, **dadurch gekennzeichnet, dass** der zumindest eine Lüfter (9) durch eine Öffnung (13) in der Wandung (10) Luft (8) ansaugt und als Radialventilator ausgebildet ist.

5. Ofen nach einem der Ansprüche 1 bis 3 **dadurch gekennzeichnet, dass** der zumindest eine Lüfter (9) Luft (8) ansaugt und als Axialventilator ausgebildet ist und Luft (8) durch eine Öffnung (13) in der Wandung (10) bläst, wobei die Öffnung (13) in der Wandung Luftleitvorrichtungen (11) aufweist.

6. Ofen nach einem der Ansprüche 1 bis 3 **dadurch gekennzeichnet, dass** der zumindest eine Lüfter (9) in einer Leitung (15) vorgesehen ist, die eine quer zur Ofenstrecke ausgerichtete Ofenseite mit der gegenüberliegenden quer zur Ofenstrecke ausgerichtete Ofenseite verbindet.

## Claims

1. Kiln (1) for firing ceramic blanks (6), in particular bricks, having a plurality of trains (4, 5) . which comprise a number of kiln cars (16), are movable in parallel with one another and along a longitudinally extending kiln portion, and on which the blanks (6) are to be arranged, wherein the kiln portion has a firing zone for heating the blanks (6), and wherein trains (4, 5) which are arranged next to one another are movable through a firing zone in opposite directions without a reversal of direction, and wherein at least one fan (9) is provided, and wherein the air (8) that is conveyed by the at least one fan (9) in the kiln (1) is at least partially circulated in the kiln (1) and fed back to the fan (9) and at least one air guiding device (11) is provided in the kiln portion, by means of which device air (8) can be guided in the kiln portion in the direction of blanks (6), and wherein a wall (10) is provided in an air circulation zone of the kiln (1) above the blanks (6) in the kiln portion, by means of which wall at least one circulation channel (3) is separated from a main tunnel (14) of the kiln portion, and wherein at least one air guiding device (11) is provided on the wall (10) and the at least one air guiding device (11) of the wall (10) protrudes at least in regions into a main tunnel (14) of the kiln portion.

2. Kiln according to claim 1, **characterised in that** a plurality of air guiding devices (11) arranged next to one another at a distance are provided in the kiln portion.

3. Kiln according to claim 2, **characterised in that** the air guiding devices (11) have different lengths.

4. Kiln according to any of claims 1 to 3, **characterised in that** the at least one fan (9) draws air (8) in through an opening (13) in the wall (10) and is designed as a radial fan.

5. Kiln according to any of claims 1 to 3, **characterised in that** the at least one fan (9) draws in air (8), is designed as an axial fan and blows air (8) through an opening (13) in the wall (10), the opening (13) in the wall having air guiding devices (11).

6. Kiln according to any of claims 1 to 3, **characterised in that** the at least one fan (9) is provided in a line (15) which connects a kiln side which is oriented transversely to the kiln portion to the opposite kiln side which is oriented transversely to the kiln portion.

## Revendications

1. Four (1) destiné à la cuisson de corps moulés en céramique (6), en particulier des briques, avec une pluralité de trains (4, 5), comprenant plusieurs chariots de four (16) pouvant être déplacés parallèlement les uns aux autres et le long d'un chemin de four longitudinal et sur lesquels sont agencés les corps moulés (6), dans lequel le chemin de four présente une zone de cuisson destinée au chauffage des corps moulés (6), et dans lequel des trains (4, 5) juxtaposés les uns à côté des autres peuvent être déplacés à travers une zone de cuisson dans des directions opposées sans inversion de direction, et dans lequel au moins un ventilateur (9) est prévu, et dans lequel l'air (8) amené dans le four (1) par le au moins un ventilateur (9) est au moins partiellement mis en circulation dans le four (1) et renvoyé vers le ventilateur (9) et au moins un dispositif de guidage d'air (11), par l'intermédiaire duquel l'air (8) peut être guidé au sein du chemin de four en direction des corps moulés (6), est prévu au sein du chemin de four, et dans lequel une paroi (10), par l'intermédiaire de laquelle au moins un canal de mise en circulation (3) est séparé d'un tunnel principal (14) du chemin de four, est prévue dans une zone de mise en circulation d'air du four (1) au sein du chemin de four au-dessus des corps moulés (6), et dans lequel au moins un dispositif de guidage d'air (11) est prévu au niveau de la paroi (10) et le au moins un dispositif de guidage d'air (11) de la paroi (10) fait saillie au moins localement dans un tunnel principal (14) du chemin de four.

2. Four selon la revendication 1, **caractérisé en ce que** plusieurs dispositifs de guidage d'air (11) juxtaposés à distance les uns des autres sont prévus au sein du chemin de four.

3. Four selon la revendication 2, **caractérisé en ce que** des dispositifs de guidage d'air (11) présentent une longueur différente.

4. Four selon l'une quelconque des revendications 1 à 3, **caractérisé en ce que** le au moins un ventilateur (9) aspire de l'air (8) à travers une ouverture (13) dans la paroi (10) et est réalisé sous forme de ventilateur radial.

5. Four selon l'une quelconque des revendications 1 à 3, **caractérisé en ce que** le au moins un ventilateur (9) aspire de l'air (8) et est réalisé sous forme de ventilateur axial et souffle de l'air (8) à travers une ouverture (13) dans la paroi (10), dans lequel l'ouverture (13) dans la paroi présente des dispositifs de guidage d'air (11).

6. Four selon l'une quelconque des revendications 1 à 3, **caractérisé en ce que** le au moins un ventilateur (9) est prévu au sein d'une conduite (15) qui relie un côté de four orienté transversalement par rapport au chemin de four avec le côté de four opposé orienté transversalement par rapport au chemin de four.
